# EUROPÄISCHE PATENTSCHRIFT

(11) **EP 1 102 919 B1**
(45) Veröffentlichungstag und Bekanntmachung des Hinweises auf die Patenterteilung: **03.05.2006**
(21) Anmeldenummer: 00945578.3
(22) Anmeldetag: 30.05.2000
(51) Int. Cl.: F01M 11/03

(54) **HYDRAULIKÖLBEHÄLTER**
HYDRAULIC OIL RESERVOIR
RESERVOIR D'HUILE HYDRAULIQUE

(30) Priorität: 04.06.1999 DE 19925635
(43) Veröffentlichungstag der Anmeldung: 30.05.2001
(73) Patentinhaber: ZF Lemförder Metallwaren AG, 49441 Lemförde (DE)
(72) Erfinder: FANGMANN, Thomas, D-49413 Dinklage (DE); GRÖGER, Dieter, D-49401 Damme (DE)
(86) Internationale Anmeldenummer: PCT/DE2000/001730
(87) Internationale Veröffentlichungsnummer: WO 2000/075494

(56) Entgegenhaltungen:
- US-A- 3 214 023
- US-A- 3 572 508
- US-A- 3 750 888
- US-A- 3 786 920
- US-A- 3 853 763
- US-A- 3 928 201
- US-A- 4 915 852

## Beschreibung

Die Erfindung betrifft einen Hydraulikölbehälter für Kraftfahrzeuge nach dem Oberbegriff des Patentanspruches 1.

Derartige Hydraulikölbehälter sind Bestandteil des Hydraulikkreislaufes in Kraftfahrzeugen. Der erforderliche Hydraulikdruck wird durch eine Hydraulikpumpe erzeugt.
Die Verbindung zwischen den einzelnen Elementen des Hydraulikkreislaufes erfolgt über Hydraulikleitungen.
In dem Hydraulikölbehälter ist ein Ölfilter eingesetzt, das zur Filterung des von den Servoelementen des Kraftfahrzeuges zurückströmenden Öles dient.
Als Ölfilter sind sowohl grobe Gewebefilter als auch feine Papierfilter bekannt, die entsprechend den gestellten Anforderungen zum Einsatz kommen.

Es ist erforderlich, die Filterfläche des Ölfilters so auszulegen, daß bei einer zu erwartenden durchschnittlichen Verschmutzung des Ölfilters, auf seine Lebensdauer bezogen, eine ausreichende Reserve zur Verfügung steht, um zu vermeiden, daß ein maximaler Staudruck in dem Hydrauliksystem überschritten wird. Das Zusetzen der Ölfilterproren birgt nämlich die Gefahr in sich, daß der Staudruck innerhalb des Hydrauliksystems unkontrollierbar ansteigt, wodurch möglicherweise einzelne Aggregate in ihrer Funktion gestört werden oder gänzlich ausfallen können.

Dies bedeutet jedoch auch, daß mit feiner werdendem Filtermaterial die Baugröße des Ölfilters ansteigen muß, um ausreichend Reservefilterfläche zur Verfügung stellen zu können, weil sich die feineren Poren naturgemäß schneller mit Verunreinigungen zusetzen, als grobere. Darüber hinaus muß auch gewährleistet sein, daß der Ölfilter während des Betriebes ständig unterhalb des Ölspiegels im Hydraulikölbehälter angeordnet ist, da er ansonsten Luft ansaugen würde, die in dem Hydrauliksystem die Funktionsfähigkeit der Aggregate des Kraftfahrzeuges beeinträchtigen kann.
In Verbindung mit dieser Anforäerung, die letztlich auch bei Schrägstellung des Kraftfahrzeuges von Bedeutung ist, ergibt sich das wesentliche Erfordernis, die Baugröße des den Ölfilter aufnehmenden Hydraulikölbehälters zu erhöhen, was nicht nur von Nachteil ist, weil der im Motorraum zur Verfügung stehende Bauraum immer knapper bemessen wird, sondern auch, weil ein derartiger Hydraulikölbehälter material- und damit kostenintensiv ist. Die Anforderungen an die Filterfeinheit und den Staudruck geben bei Lösungen nach dem Stand der Technik die erforderliche Größe des Ölfilters und damit die Ölmenge sowie die Baugröße des Hydraulikölbehälteis vor.

Der Erfindung liegt die technische Problemstellung zugrunde, einen Hydraulikölbehälter zu schaffen, der bei geringer Baugröße gleichfalls den Einsatz feinporiger Ölfilter gestattet.

Die Erfindung löst diese technische Problemstellung mit den kennzeichenden Merkmalen des Patentanspruches 1.

Demgemäß wird vorgeschlagen, den Ölfilter in ein in dem Hydraulikölbehälter vorhandenes, separates Filtergehäuse einzusetzen. Der Hydraulikölbehälter ist insgesamt aus Kunststoff hergestellt und besteht im Vormontagezustand aus mehreren Einzelteilen, die nach der Einbringung des Filtergehäuses in den Hydraulikölbehälter ein verbundenes, einteiliges Bauteil bilden.

Der Ölfilter ist somit komplett gekapselt innerhalb des Hydraulikölbehälters untergebracht.

Durch diese Kapselung wird stets gewährleistet, daß der Ölfilter vollständig unterhalb des Ölpegels, der sich innerhalb des inneren Filtergehäuses aufbaut angeordnet ist. Dies trifft auch bei Schrägstellung des Kraftfahrzeuges zu.

Dadurch wird es fernerhin möglich, hochfeine Ölfiltermaterialien zum Einsatz zu bringen, da die Baugröße des Filtergehäuses einen Großteil des Innenraumes des Hydraulikölbehälters einnehmen kann und somit der freien Konstruktionsgestaltung des Filtergehäuses wenig Grenzen gesetzt sind.

Weitere Ausgestaltungen der Erfindung sind Gegenstand der Unteransprüche.

So ist es insbesondere vorteilhaft, das Filtergehäuse zweiteilig auszuführen, wobei es beispielsweise aus einem Oberteil und einem Unterteil besteht, deren Verbindung eine Rast- oder Schnappverbindung sein kann. Andere Verbindungsarten sind selbstverständlich ebenso möglich.
An der Außenoberfläche des Unterteiles des den Ölfilter aufnehmenden Filtergehäuses wird voschlagsgemäß ein Bund angeformt, der festsitzend und dichtend in einen komplementären, in dem Hydraulikölbehälter vorhandenen Axialflansch eingesetzt ist.

Der Unterboden des Unterteiles weist ferner eine Einströmöffnung auf, durch die über wenigstens einen Druckstutzen innerhalb einer durch den Axialflansch gebildeten Einströmkammer das zu filternde Hydrauliköl in den Ölfilter einströmt.

Darüberhinaus ist es sinnvoll, in dem Unterteil des Filtergehäuses wenigstens eine Auslassöffnung vorzusehen, durch die das gefilterte Hydrauliköl in den Hydraulikölbehälter überströmen kann.
Das Hydrauliköl fließt somit über den Druckstutzen in die Einströmkammer, durchtritt dann die Einströmöffnung des Unterteiles, wird durch das Gewebe des Filters gedrückt und dabei gefiltert, um anschließend durch die Auslassöffnung in den Hydraulikölbehälter abgegeben zu werden. Nun kann es dem Hydrauliksystem erneut gereinigt zugeführt werden.

In der Auslassöffnung wird gemäß einer weiteren Ausgestaltung der Erfindung ebenfalls ein zusätzliches Filtermaterial vorgesehen.

Der Ölfilter sollte sich innerhalb des Filtergehäuses gegen die Kraft eines Federelementes abstützen. Die Abstützung des Ölfilters über ein Federelement bedeutet einen zusätzlichen Sicherheitsaspekt für das Gesamtsystem. Falls der Ölfilter vollständig zugesetzt sein sollte, würde sich nämlich der im Gesamtsystem vorhandene Staudruck unangemessen erhöhen. Dieser würde mithin über den Druckstutzen und die Einströmkammer auch auf den Innenraum des Ölfilters einwirken, sodaß die Gefahr der Zerstörung einzelner Bauteile bestehen könnte. Der Ölfilter würde in diesem Fall gegen die Kraft des Federelementes in axialer Richtung in geringem Maße angehoben, so daß das Öl unterhalb des angehobenen Ölfilters in Richtung der Auslassöffnung strömen kann und somit dem Gesamtsystem wieder zugeführt wird.
Diese Lösung beschreibt mithin einen Beipass, der gegenüber oberhalb des Ölfilters angebrachten Überdruckventilen den Vorteil aufweist, daß bereits im Ölfiltermaterial vorhandene Schmutzpartikel nicht wieder aus diesem herausgelöst und in das Hydrauliksystem zurückgeführt werden können, da das Hydrauliköl unterhalb des Ölfilters austritt.

Insgesamt ist bei einer erfindungsgemäßen Lösung aufgrund einer Unterdruckerstbefüllung gewährleistet, daß der Ölstand innerhalb des Filtergehäuses stets höher liegt als der Ölstand des Hydraulikölbehälters.
Natürlich besteht auch die Gefahr, daß sich das Filtergehäuse aus seiner Verankerung im Hydraulikölbehälter löst. Um dies zu vermeiden und damit die axiale Beweglichkeit des Filtergehäuses insgesamt zu begrenzen, wird darüberhinaus vorgeschlagen, einen Niederhalter entweder an der Innenoberfläche des Hydraulikölbehälters oder an der Außenoberfläche des Oberteiles der Filtergehäuses anzubringen, der einen nur geringen Abstand zu der ihm gegenüberliegend zugeordneten Oberfläche des entsprechend anderen Bauteiles aufweist.

Die Teile das Hydraulikölbehälters können nach der Einbringung des Filtergehäuses in den Hydraulikölbehälter beispielsweise mittels eines Ultraschall-, eines Orbitalschweißverfahrens oder einer Klebverbindung miteinander verbunden werden und somit letztlich ein einteiliges Bauteil bilden.
Als Filtermaterialien können sowohl für den Ölfilter als auch für eine entsprechende Einlage in der Auslassöffnung Gewebe-, Metall- oder Papierfilter bedarfsgerechter Feinheit eingesetzt werden.

Ein erfindungsgemäßer Hydraulikölbehälter weist gleich mehrere Vorteile gegenüber aus dem Stand der Technik bekannten auf.
Durch die Kapselung des Filtergehäuses kann eine sehr große Filterfläche zum Einsatz kommen. Diese kann dementsprechend mit einer höheren Feinheit der Poren ausgestattet sein, als dies bei bekannten Lösungen nach dem Stand der Technik möglich ist. Die erfindungsgemäßen Hydraulikölbehälter können auch insgesamt kleiner ausgeführt sein.

Ein Einlassen von Luft in das Hydraulikölsystem ist nahezu ausgeschlossen, da infolge der Kapselung des Ölfilters in dem Filtergehäuse dieser stets unterhalb des Ölpegels angeordnet ist. Da das Filtergehäuse ein in sich geschlossenes, gekapseltes System darstellt, ist ein selbständiges Absinken des Ölpegels innerhalb des Filtergehäuses nicht möglich. Der Staudruck kann auf einem vordefinierbaren, maximalen Wert begrenzt werden, so daß mit einem erfindungsgemäßen Hydraulikölbehälter die Zerstörung des Systems vermieden wird.

Die einfache Ausführung des hierzu verwendeten Beipassess verhindert darüberhinaus, daß bereits aus dem Hydrauliköl gefilterte Partikel aus dem Ölfilter herausgerissen und dem System wieder zugeführt werden, da das Öl den Ölfilter unterströmt.

Zwei Ausführungen eines erfindungsgemäßen Hydraulikölbehälters werden nachstehend unter Bezugnahme auf die zugehörigen Zeichnungen näher beschrieben.

Es zeigen:
- Figur 1:: eine erste, sehr einfache Ausführung eines erfindungsgemäßen Hydraulikölbehälters im Schnitt,
- Figur 2:: eine weitere Ausführungsform eines erfindungsgemäßen Hydraulikölbehälters im Schnitt
- und:
- Figur 3:: eine Explosivdarstellung des Filtergehäuses eines erfindungsgemäßen Hydraulikölbehälters.

Der in den Figuren insgesamt mit 2 bezeichnete Hydraulikölbehälter nimmt ein insgesamt mit 3 bezeichnetes Filtergehäuse auf. Der Hydraulikölbehälter 2 und das Filtergehäuse bestehen aus Kunststoff, vorzugsweise aus Polyamid. In das Filtergehäuse 3 ist ein Ölfilter 1 eingesetzt. Das Filtergehäuse 3 ist zweiteilig ausgeführt und besteht vorliegend aus einem Oberteil 4 und einem Unterteil 5.

An dem Unterboden 8 des Unterteiles 5 ist ein Bund 6 einteilig angeformt. Dieser gemäß den dargestellten Ausführungen ringförmige Bund 6 wird öldicht und festsitzend unter Zwischenfügung eines Dichtringes 29 in einen komplementären Axialflansch 7 des Hydraulikölbehälters 2 eingesetzt. Der Axialflansch 7 ist integraler, also einteilig angeformter Bestandteil des Hydraulikölbehälters 2.

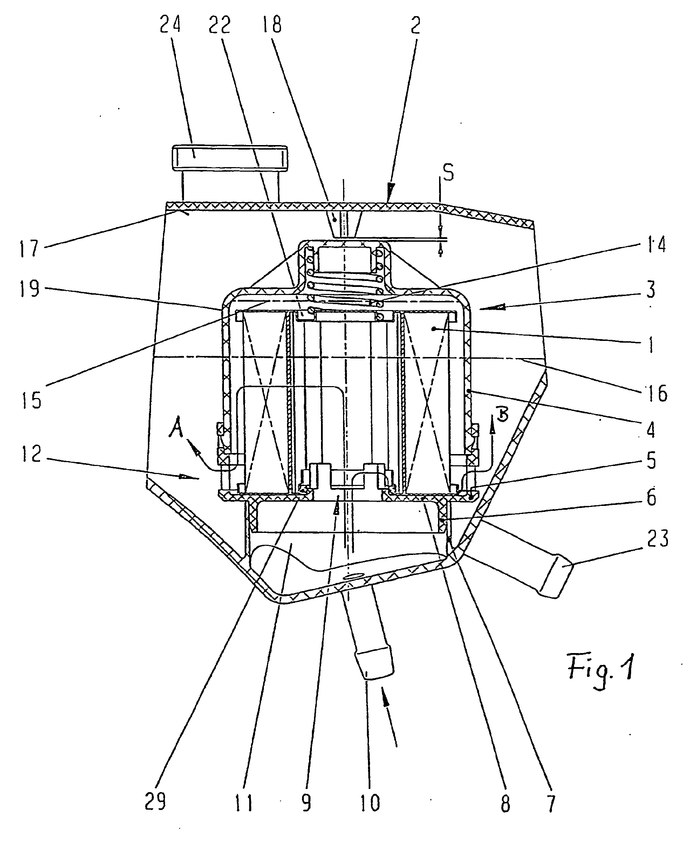

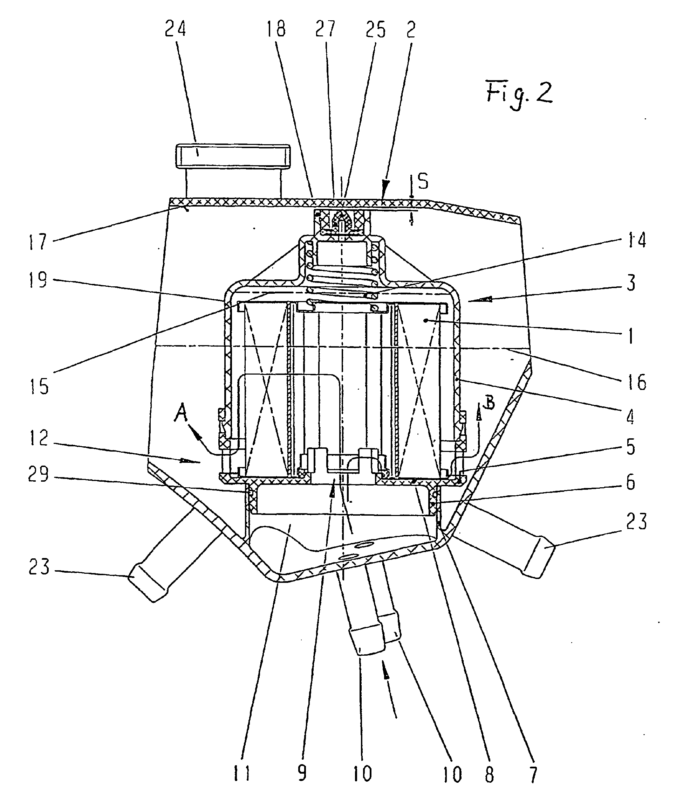

Innerhalb des Axialflansches 7 wird somit eine Einströmkammer 11 gebildet, die bei der Ausführung in Figur 1 einen Druckstutzen 10 und bei der Ausführung in Figur 2 zwei Druckstutzen 10 aufweist. Über diese Druckstutzen 10 wird Hydraulikflüssigkeit in die Einströmkammer 11 eingebracht. Die Hydraulikflüssigkeit tritt anschließend durch eine in dem Unterboden 8 vorhandene Einströmöffnung 9 in das Filtergehäuse 3 ein und durchsetzt anschließend das Filtermaterial des Ölfilters 1, um danach durch mehrere Auslassöffnungen 12, welche in einen ringförmigen Rand des Unterteiles 5 eingebracht sind, in den Hydraulikölbehälter auszutreten. Von dort kann das nunmehr gereinigte Hydrauliköl über einen Saugstutzen dem Hydrauliksystem wieder zugeführt werden. Die Flußrichtung des Hydrauliköles ist in den Figuren 1. und 2 durch den Pfeil "A" kenntlich gemacht.

Als Filtermaterial 13 können gemäss den beschriebenen Lösungen Gewebe-, Metall- oder Papierfilter zum Einsatz kommen, die für den Ölfilter eine Feinheit zwischen 10 µm und 20 µm, vorzugsweise jedoch 15 µm und für die Auslassöffnungen 12 eine Feinheit zwischen 150 und 200 µm aufweisen.

Der Ölfilter 1 stützt sich innerhalb des Filtergehäuses 3 über ein Federelement 14 ab und wird dadurch gegen die Innenoberfläche des Unterbodens 8 des Filtergehäuses gedrückt und unter Vorspannung gehalten. Entsprechend der Auslegung der Feder 14 kann damit eine geringfügige axiale Beweglichkeit des Ölfilters 1 immer dann ermöglicht werden, wenn der Staudruck innerhalb des Systems vorgeschriebene Grenzwerte überschreitet. Dies kann beispielsweise geschehen, wenn das Filtermaterial zu einem überwiegenden Teil zugesetzt ist. Der Ölfilter 1 bewegt sich daraufhin geringfügig in axialer Richtung und das Hydrauliköl, das durch die Einströmöffnung 9 in das Filtergehäuse 3 eingeflossen ist, wird unterhalb des angehobenen Ölfilters 1 in Richtung der Auslassöffnung 12 abgeführt. Die Flußrichtung des Hydrauliköles ist in den Figuren 1 und 2 durch den Pfeil "B" kenntlich gemacht.
Wie aus den Figuren 1 und 2 weiterhin ersichtlich ist, liegt der Ölstand 15 des Filtergehäuses oberhalb des Ölstandes 16 des Hydraulikölbehälters.

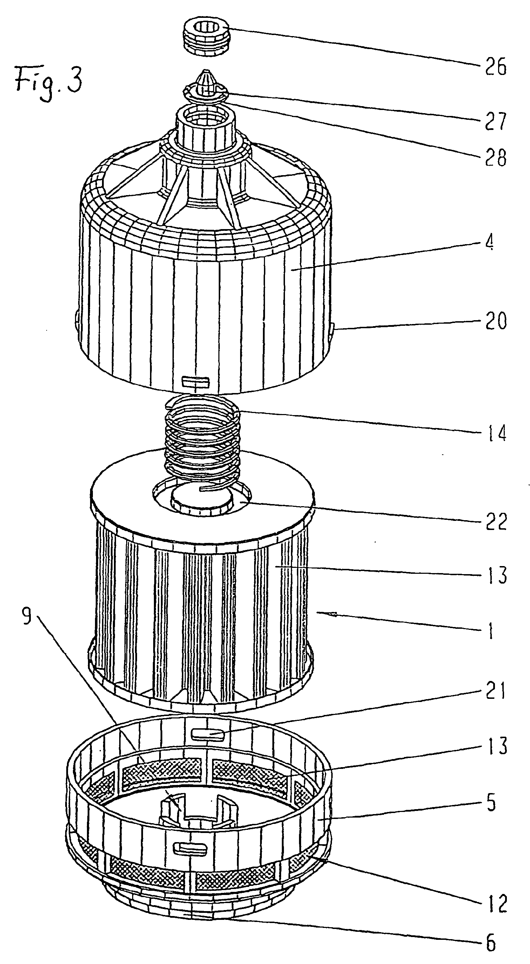

Wie aus der Figur 3 entnehmbar, wird in die Auslassöffnungen 12 ein Filtermaterial eingesetzt. Das Federelement 14, welches vorliegend aus einer Spiralfeder besteht, ist in das Oberteil des Ölfilters 1 innerhalb einer Ringnut 22 aufgenommen. Die Verbindung von Oberteil 4 und Unterteil 5 des Filtergehäuses 3 erfolgt über eine Rastverbindung. Diese besteht aus mehreren, am Umfang des Oberteiles 4 verteilt angeordneten Rastnasen 20, die in komplementäre Ausnehmungen 21 des Unterteiles 5 eingreifen.

Um auch bei mechanischer Einwirkung auf das Filtergehäuse 3, wie sie beispielsweise durch das sich bewegende Hydrauliköl entsteht, zu verhindern, daß sich das Filtergehäuse 3 aus dem Axialflansch 7 löst, beziehungsweise um die selbsttätige Trennung von Oberteil 4 und Unterteil 5 zu verhindern, ist bei der Ausführung gemäß Figur 1 ein Niederhalter 18 an der Innenoberfläche 17 des Hydraulikölbehälters angebracht. Dieser Niederhalter 18 ist mit einem geringen Abstand "s" zur Außenoberfläche 19 des Filtergehäuses 3 angeordnet.

Die Figur 2 unterscheidet sich von der Ausführung in Figur 1 darin, daß hier umgekehrt an der Außenoberfläche des Oberteiles 4 des Filtergehäuses 3 ein Niederhalter 18 angeformt ist, der mit einem geringen Abstand "s" zu der Innenoberfläche 17 des Hydraulikölbehälters 2 angeordnet ist.

In der Figur 2 wird darüberhinaus eine weitere, interessante Ausgestaltung der Erfindung dargestellt. Es ist bei nahezu jedem Hydrauliksystem zu beobachten, daß zeitweilig Lufteinschlüsse in dem Öl vorhanden sind. Um zu vermeiden, daß sich die Luft innerhalb des Oberteiles 4 ansammelt, ist eine Luftablasseinrichtung vorgesehen, die selbsttätig öffnet, wenn im Oberteil 4 eine vorbestimmbare Luftmenge vorhanden ist und somit ein Entweichen dieser Luft ermöglicht. Nach dem Entweichen der Luft verschließt sich die Luftablassöffnung selbsttätig wieder. Die Luftablasseinrichtung besteht hierzu aus einem kegelförmigen Ventil 27 aus elastischem Gummi, das an seiner Spitze geschlitzt ist. Die Schlitze sind im Normzustand verschlossen. In das Ventil 27 ist von seiner Unterseite, also von der Innenraumseite des Filtergehäuses 3 gesehen, ein Sackloch eingebracht, das unmittelbar mit den Schlitzen 25 in Wirkverbindung steht. Der einteilig an dem Ventil 27 angeformte Ventilteller 28 stützt sich dichtend gegen eine korrespondierende Oberfläche in dem Oberteil 4 des Filtergehäuses 3 ab. Das Ventil ist mittels eines Verschlußteiles 26 in dem Oberteil 4 festgelegt.

Die Erstvakuumbefüllung des Gesamtsystems erfolgt über einen Öleinfüllstutzen 24, in den das Öl eingefüllt und über den gleichzeitig die Luft aus dem Hydraulikölbehälter 2 abgesaugt wird. Das eingefüllte Öl durchströmt den Saugstutzen 23 und sämtliche daran angeschlossenen Aggregate bis es letztlich durch den Druckstutzen 10 wieder in den Hydraulikölbehälter 2 einläuft. Dies wird praktiziert bis der Hydraulikölbehälter bis zu seiner Füllstandsmarkierung mit Öl befüllt ist. Infolge des im System herrschenden Unterdruckes ist es dann in der zuvor beschriebenen Weise möglich, daß der Ölstand 15 des des Filtergehäuses 3 oberhalb des Ölstandes 16 des Hydraulikölbehälters 2 liegt.

### Bezugszeichenliste:

- 1: Ölfilter
- 2: Hydraulikölbehälter
- 3: Filtergehäuse
- 4: Oberteil
- 5: Unterteil
- 6: Bund
- 7: Axialflansch
- 8: Unterboden
- 9: Einströmöffnung
- 10: Druckstutzen
- 11: Einströmkammer
- 12: Auslassöffnung
- 13: Filtermaterial
- 14: Federelement
- 15: Ölstand des Filtergehäuses
- 16: Ölstand des Hydraulikölbehälters
- 17: Innenoberfläche des Hydraulikölbehälters
- 18: Niederhalter
- 19: Außenoberfläche des Filtergehäuses
- 20: Rastnase
- 21: Ausnehmung
- 22: Ringnut
- 23: Saugstutzen
- 24: Öleinfüllstutzen
- 25: Luftaustrittsöffnung (Schlitz)
- 26: Verschlußteil
- 27: Ventil
- 28: Ventilteller
- 29: Dichtring

## Patentansprüche

1. Hydraulikölbehälter für Kraftfahrzeuge, mit einem Ölfilter, der in ein in dem Hydraulikölbehälter (2) vorhandenes Filtergehäuse (3) eingesetzt ist,
**dadurch gekennzeichnet, daß**
der Hydraulikölbehälter (2) insgesamt aus Kunststoffbesteht und dass der im Vormontagezustand mehrteilige Hydraulikölbehälter (2) nach der Einbringung des Filtergehäuses (3) ein mittels Ultraschall- oder Orbitalschweißtechnik oder einer Klebverbindung verbundenes, einteiliges Bauteil bildet.

2. Hydraulikölbehälter nach Anspruch 1,
**dadurch gekennzeichnet, daß**
das Filtergehäuse (3) zweiteilig ist.

3. Hydraulikölbehälter nach Anspruch 2,
**dadurch gekennzeichnet, daß**
das Filtergehäuse (3) aus einem Oberteil (4) und einem Unterteil (5) besteht, deren Verbindung eine Rast- oder Schnappverbindung ist.

4. Hydraulikölbehälter nach Anspruch 2 oder 3,
**dadurch gekennzeichnet, daß**
an der Außenoberfläche des Unterteiles ein Bund (6) angeformt ist, der festsitzend und dichtend in einen komplementären, in dem Hydraulikölbehälter vorhandenen Axialflansch (7) eingesetzt ist.

5. Hydraulikölbehälter nach Anspruch 4,
**dadaurch gekennzeichnet, daß**
in den Unterboden (8) des Unterteiles (5) eine Einströmöfnung (9) eingelassen ist, durch die über wenigstens einen Druckstutzen (10) und eine durch den Axialflansch gebildeten Einströmkammer (11) zu filterndes Hydrauliköl in den Ölfilter (1) strömt.

6. Hydraulikölbehälter nach einem der Ansprüche 3 bis 5,
**dadaurch gekennzeichnet, daß**
in dem Unterteil (5) wenigstens eine Auslassöffnung (12) vorhanden ist.

7. Hydraulikölbehälter nach Anspruch 6,
**dadaurch gekennzeichnet, daß**
die wenigstens eine Auslassöffnung (12) ein Filtermaterial (13) aufweist.

8. Hydraulikölbehälter nach einem der vorhergehenden Ansprüche,
**dadurch gekennzeichnet, daß**
der Ölfilter (1) sich gegen die Kraft eines Federelementes (14) in dem Filtergehäuse (3) abstützt.

9. Hydraulikölbehälter nach Anspruch 8,
**dadurch gekennzeichnet, daß**
der Ölfilter (1) geringfügig in axialer Richtung beweglich in dem Filtergehäuse (3) aufgenommen ist.

10. Hydraulikölbehälter nach einem der vorhergehenden Ansprüche,
**dadurch gekennzeichnet, daß**
der Ölstand (15) innerhalb des Filtergehäuses (3) aufgrund einer UnterdruckErstbefüllung des Hydraulikölbehälters höher als der Ölstand (16) des Hydraulikölbehälters (2) ist.

11. Hydraulikölbehälter nach einem der Ansprüche 3 bis 10,
**dadurch gekennzeichnet, daß**
der Hydraulikölbehälter (2) an seiner Innenoberfläche (17) mindestens einen dem Oberteil (4) des Filtergehäuses (3) gegenüberliegend angeordneten Niederhalter (18) aufweist.

12. Hydraulikölbehälter nach einem der Ansprüche 3 bis 10,
**dadurch gekennzeichnet, daß**
das Filtergehäuse (3) auf der Außenoberfläche (19) seines Oberteiles (4) mindestens einen der Innenoberfläche (17) des Hydraulikölbehälters (2) gegenüberliegend angeordneten Niederhalter (18) aufweist.

13. Hydraulikölbehälter nach einem der Ansprüche 11 oder 12,
**dadurch gekennzeichnet, daß**
zwischen dem Niederhalter (18) und der ihm gegenüberliegend zugeordneten Oberfläche (17 oder 19) ein geringer Abstand (s) vorhanden ist.

14. Hydraulikölbehälter nach einem der vorhergehenden Ansprüche,
**dadurch gekennzeichnet, daß**
als Filtermaterial ein Gewebe-, Metall- oder Papierfilter eingesetzt ist.

15. Hydraulikölbehälter nach einem der vorhergehenden Ansprüche,
**dadurch gekennzeichnet, daß**
in dem Oberteil (4) des Filtergehäuses (3) eine selbsttätig öffnende und sich verschließende "Luftablasseinrichtung vorhanden ist.

16. Hydraulikölbehälter nach Anspruch 15,
**dadurch gekennzeichnet, daß**
die Luftablasseinrichtung aus einem kegelförmigen Ventil (27), das an seiner Spitze geschlitzt ist; besteht, wobei die Schlitze im Normzustand verschlossen sind, das Ventil (27) ein Sackloch aufweist, das unmittelbar mit den Schlitzen (25) in Wirkverbindung steht und ein einteilig an dem Ventil (27) angeformter Ventilteller (28) sich dichtend gegen eine korrespondierende Oberfläche in dem Oberteil (4) des Filtergehäuses 3 abstützt, während das Ventil mittels eines Verschlußteiles (26) in dem Oberteil (4) festgelegt ist.

## Claims

1. Hydraulic oil container for motor vehicles, with an oil filter which is inserted in a filter housing (3) provided in the hydraulic oil container (2),
**characterised in that**
the hydraulic oil container (2) is made entirely from plastic and the multiple parts of the hydraulic oil container (2) in the pre-assembled state are joined by means of an ultrasound welding process or an orbital welding process or a bonded connection to form an integral component once the filter-housing (3) has been introduced.

2. Hydraulic oil container as claimed in claim 1,
**characterised in that**
the filter housing (3) comprises two parts.

3. Hydraulic oil container as claimed in claim 2,
**characterised in that**
the filter housing (3) consists of a top part (4) and a bottom part (5), which are joined by means of a catch or snap-fit connection.

4. Hydraulic oil container as claimed in claim 2 or 3,
**characterised in that**
a collar (6) is integrally formed on the external surface of the bottom part, which is inserted in a stationary and sealing arrangement in a complementary axial flange (7) provided in the hydraulic oil container.

5. Hydraulic oil container as claimed in claim 4,
**characterised in that**
an inlet orifice (9) extends through the base (8) of the bottom part (5), through which the hydraulic oil to be filtered flows into the oil filter (1) via at least one pressure connector (10) and via an inlet chamber (11) formed by the axial flange.

6. Hydraulic oil container as claimed in one of claims 3 to 5,
**characterised in that**
at least one outlet orifice (12) is provided in the bottom part (5).

7. Hydraulic oil container as claimed in claim 6,
**characterised in that**
the at least one outlet orifice (12) incorporates a filter material (13).

8. Hydraulic oil container as claimed in one of the preceding claims,
**characterised in that**
the oil filter (1) is supported in the filter housing (3) against the force of a spring element (14).

9. Hydraulic oil container as claimed in claim 8,
**characterised in that**
the oil filter (1) is accommodated in the filter housing (3) so as to be capable of moving slightly in the axial direction.

10. Hydraulic oil container as claimed in one of the preceding claims,
**characterised in that**
the oil level (15) inside the filter housing (3) is higher than the oil level (16) of the hydraulic oil container (2) due to a negative pressure when the hydraulic oil container is initially filled.

11. Hydraulic oil container as claimed in one of claims 3 to 10,
**characterised in that**
the hydraulic oil container (2) has at least one holder (18) disposed on its internal surface (17) lying opposite the top part (4) of the filter housing (3).

12. Hydraulic oil container as claimed in one of claims 3 to 10,
**characterised in that**
the filter housing (3) has at least one holder (18) disposed on the external surface (19) of its top part (4) lying opposite the internal surface (17) of the hydraulic oil container (2).

13. Hydraulic oil container as claimed in one of claims 11 or 12,
**characterised in that**
there is a slight distance (s) between the holder (18) and the co-operating surface (17 or 19) lying opposite it.

14. Hydraulic oil container as claimed in one of the preceding claims,
**characterised in that**
fabric, metal or paper filters are used as the filter material.

15. Hydraulic oil container as claimed in one of the preceding claims,
**characterised in that**
an automatically opening and closing air venting unit is provided in the top part (4) of the filter housing (3).

16. Hydraulic oil container as claimed in claim 15,
**characterised in that**
the air venting unit comprises a conical valve (27) which has a slit in its tip, which slit is closed in the normal state, and the valve (27) has a blind bore which actively communicates directly with the slit (25), and a valve disc (28) integrally formed on the valve (27) is supported against a matching surface in the top part (4) of the filter housing (3) in a sealing arrangement, whilst the valve is secured in the top part (4) by means of a closing part (26).

## Revendications

1. Réservoir d'huile hydraulique pour véhicules automobiles, comportant un filtre à huile, qui est inséré dans un boîtier de filtre (3) présent dans le réservoir d'huile hydraulique (2),
**caractérisé en ce que**
le réservoir d'huile hydraulique (2) est constitué dans son ensemble par une matière plastique et que le réservoir d'huile hydraulique (2) constitué de plusieurs éléments d'état avant assemblage forme, après l'insertion du boîtier de filtre (3), un composant monobloc relié au moyen d'une technique à ultrasons ou d'une technique de soudage orbital ou au moyen d'une liaison collée.

2. Réservoir d'huile hydraulique selon la revendication 1, **caractérisé en ce que**
le boîtier de filtre (3) est formé de deux éléments.

3. Réservoir d'huile hydraulique selon la revendication 2, **caractérisé en ce que**
le boîtier de filtre (3) est constitué par une partie supérieure (4) et une partie inférieure (5), dont la liaison est une liaison à encliquetage ou à déclic.

4. Réservoir d'huile hydraulique selon la revendication 2 ou 3, **caractérisé en ce que**
sur la surface extérieure de la partie inférieure est formé un collet (6), qui est inséré en étant positionné de façon fixe et d'une manière étanche dans une bride axiale complémentaire (7) présente dans le réservoir d'huile hydraulique.

5. Réservoir d'huile hydraulique selon la revendication 4, **caractérisé en ce que**
dans le fond de base (8) de la partie inférieure (5) est aménagée une ouverture d'entrée (9), par laquelle de l'huile hydraulique à filtrer pénètre dans le filtre à huile (1) par l'intermédiaire d'au moins une tubulure de pression (10) et d'une chambre d'entrée (11) formée par la bride axiale.

6. Réservoir d'huile hydraulique selon l'une des revendications 3 à 5, **caractérisé en ce que**
au moins une ouverture de sortie (12) est présente dans la partie inférieure (5).

7. Réservoir d'huile hydraulique selon la revendication 6, **caractérisé en ce que**
la au moins une ouverture de sortie (12) comporte un matériau filtrant (13).

8. Réservoir d'huile hydraulique selon l'une des revendications précédentes, **caractérisé en ce que**
le filtre à huile (1) prend appui dans le boîtier de filtre (3) à l'encontre de la force d'un élément de ressort (14).

9. Réservoir d'huile hydraulique selon l'une des revendications précédentes, **caractérisé en ce que**
le filtre à huile (1) est logé dans le boîtier de filtre (3) de manière à être légèrement déplaçable dans une direction axiale.

10. Réservoir d'huile hydraulique selon l'une des revendications précédentes, **caractérisé en ce que**
le niveau d'huile (15) à l'intérieur du boîtier de filtre (3) est plus élevé que le niveau d'huile (16) dans le réservoir d'huile hydraulique (2), en raison d'un premier remplissage à dépression dans le réservoir d'huile hydraulique.

11. Réservoir d'huile hydraulique selon l'une des revendications 3 à 10, **caractérisé en ce que**
le réservoir d'huile hydraulique (2) comporte, au niveau de sa surface intérieure (17), au moins un dispositif de retenue (18) disposé en vis-à-vis de la partie supérieure (4) du boîtier de filtre (3).

12. Réservoir d'huile hydraulique selon l'une des revendications précédentes, **caractérisé en ce que**
le boîtier de filtre (3) possède, sur la surface extérieure (19) de sa partie supérieure (4), au moins un dispositif de retenue (18) disposé en vis-à-vis de la surface intérieure (17) du réservoir d'huile hydraulique (2).

13. Réservoir d'huile hydraulique selon l'une des revendications 11 ou 12, **caractérisé en ce que**
une faible distance (s) est présente entre le dispositif de retenue (18) et la surface (17 ou 19) qui lui est associée en vis-à-vis.

14. Réservoir d'huile hydraulique selon l'une des revendications précédentes, **caractérisé en ce que**
on utilise comme matériau filtrant un filtre formé de tissu, un filtre métallique ou un filtre en papier.

15. Réservoir d'huile hydraulique selon l'une des revendications précédentes, **caractérisé en ce que**
un dispositif d'évacuation d'air, qui s'ouvre et se ferme automatiquement, est présent dans la partie supérieure (4) du boîtier de filtre (3).

16. Réservoir d'huile hydraulique selon la revendication 15, **caractérisé en ce que**
le dispositif d'évacuation d'air est constitué par une soupape de forme conique (27), qui est fendue au niveau de sa pointe, les fentes étant fermées à l'état normal, que la soupape (27) possède un trou borgne, qui est relié directement aux fentes (25) selon une liaison de coopération et qu'un disque de soupape (28) formé d'un seul tenant sur la soupape (27) prend appui de façon étanche sur une surface correspondante présente dans la partie supérieure (4) du boîtier de filtre (3), tandis que la soupape est fixée à l'aide d'un élément de fermeture (26) dans la partie supérieure (4).
